(19) Europäisches Patentamt / European Patent Office / Office européen des brevets

(11) **EP 4 083 878 A1**

(12) **EUROPEAN PATENT APPLICATION**

(43) Date of publication:
**02.11.2022 Bulletin 2022/44**

(21) Application number: **22168350.1**

(22) Date of filing: **14.04.2022**

(51) International Patent Classification (IPC):
**G06Q 10/04** (2012.01)     **G06Q 50/02** (2012.01)

(52) Cooperative Patent Classification (CPC):
**G06Q 10/04; G06Q 50/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2021 JP 2021074012**

(71) Applicant: **Yanmar Holdings Co., Ltd.**
**Osaka-shi, Osaka (JP)**

(72) Inventors:
- **YOSHIMINE, Takumi**
  **Osaka-shi, Osaka (JP)**
- **OKAMOTO, Masaki**
  **Naka-Ku, Okayama (JP)**
- **MITANI, Hideki**
  **Naka-Ku, Okayama (JP)**

(74) Representative: **Dennemeyer & Associates S.A.**
**Postfach 70 04 25**
**81304 München (DE)**

(54) **WORK MANAGEMENT METHOD, WORK MANAGEMENT SYSTEM, AND WORK MANAGEMENT PROGRAM**

(57)     [Problem] To assist a user in understanding a progress status.

[Solution] A work management method includes calculating work efficiency that represents a workload performed by at least one work device 30 in a unit time on the basis of operation information indicative of work performed by the at least one work device 30 in a field. The work management method also includes estimating an estimated completion time when the work is completed on the basis of the work efficiency and a total workload 550 to be performed by the at least one work device 30. The work management method further includes outputting an estimated completion signal indicative of the estimated completion time that has been estimated.

FIG. 4

EP 4 083 878 A1

**Description**

TECHNICAL FIELD

The present invention relates to a work management method, a work management system, and a work management program.

BACKGROUND ART

A workload for crops varies according to a weather condition. For example, there is a case where, at a collection site for harvested crops, a worker who harvests the crops adjusts a collection amount to be brought in, so as to bring an ideal collection amount of the crops. Patent Document 1 discloses a technique of estimating a shortage or an excess of the collection amount by comparing the collection amount that has been brought in the collection site with a change in the ideal collection amount at a certain time point in a collection period, for example, at a certain time point of a day. For example, in the case where it is estimated that the collection amount is insufficient, a producer is notified of such insufficiency and is urged to harvest and bring the crops in the collection site.

PRIOR ART DOCUMENT

PATENT DOCUMENT

Patent Document 1: Japanese Patent No. 6267337

SUMMARY OF INVENTION

TECHNICAL PROBLEM

In the technique disclosed in Patent Document 1, the shortage or the excess is estimated on the basis of the amount of the crops that have been brought in the collection site. Meanwhile, work efficiency of the producer is not taken into consideration at all.

In view of the above situation, one of objectives of the present disclosure is to assist a user, for example, an owner or a worker of a field in understanding a progress status by estimating the progress status on the basis of work efficiency of work performed in the field. The other objectives can be understood from the following description and the description of embodiments.

SOLUTION TO PROBLEM

A description will hereinafter be made on means for solving the problem by using numbers and signs used in modes for carrying out the invention. These numbers and signs are added in parentheses for reference and to show exemplary corresponding relationships between the description of the claims and the modes for carrying out the invention. Therefore, the claims should not be construed as being limited by the description with the parentheses.

A work management method according to an aspect for achieving the above purpose includes calculating work efficiency that represents a workload performed by at least one work device (30) in a unit time on the basis of operation information indicative of work performed by the at least one work device (30) in a field. The work management method also includes estimating an estimated completion time when the work is completed on the basis of the work efficiency and a total workload (550) to be performed by the at least one work device (30). The work management method further includes outputting an estimated completion signal indicative of the estimated completion time that has been estimated.

A work management method according to another aspect for achieving the above purpose includes estimating target efficiency that represents a workload to be performed by at least one work device (30) in a unit time on the basis of a total workload (550) of work to be performed by the at least one work device (30) in a field and a target completion time by which the work should be completed. The work management method also includes outputting a target signal indicative of the estimated target efficiency.

A work management system (1000) according to yet another aspect for achieving the above purpose includes a work efficiency calculation section (160), an estimation section (170), and an output section (180). The work efficiency calculation section (160) calculates work efficiency that represents a workload performed by at least one work device (30) in a unit time on the basis of operation information indicative of work performed by the at least one work device (30) in a field. The estimation section (170) estimates an estimated completion time when the work is completed on the basis of the work efficiency and a total workload (550) to be performed by the at least one work device (30). The output section (180) outputs an estimated completion signal indicative of the estimated completion time, which has been estimated.

A work management system (1000) according to yet another aspect for achieving the above purpose includes an estimation section (170) and an output section (180). The estimation section (170) estimates target efficiency that represents a workload to be performed by at least one work device (30) in a unit time on the basis of a total workload (550) of work to be performed by the at least one work device (30) in a field and a target completion time by which the work should be completed. The output section (180) outputs a target signal indicative of the estimated target efficiency.

A work management program (310) according to yet another aspect for achieving the above purpose causes a computing unit (120) to calculate work efficiency that represents a workload performed by at least one work device (30) in a unit time on the basis of operation information indicative of work performed by the at least one work device (30) in a field. The work management program (310) also causes the computing unit (120) to estimate an estimated completion time when the work is completed on the basis of the work efficiency and a total workload (550) to be performed by the at least one work device (30). The work management program (310) further causes the computing unit (120) to output an estimated completion signal indicative of the estimated completion time that has been estimated.

A work management program (310) according to yet another aspect for achieving the above purpose causes a computing unit (120) to estimate target efficiency that represents a workload to be performed by at least one work device (30) in a unit time on the basis of a total workload (550) of work to be performed by the at least one work device (30) in a field and a target completion time by which the work should be completed. The work management program (310) also causes the computing unit (120) to output a target signal indicative of the estimated target efficiency.

ADVANTAGEOUS EFFECTS OF INVENTION

According to the above aspects, a user can understand a work progress status.

BRIEF DESCRIPTION OF DRAWINGS

Fig. 1 is a configuration diagram of a work management system in an embodiment.
Fig. 2 is a view illustrating a work management image that is displayed on a terminal in the embodiment.
Fig. 3 is a diagram illustrating a functional block executed by the work management system in the embodiment.
Fig. 4 is a flowchart illustrating processing executed by the work management system in the embodiment.
Fig. 5 is a view illustrating a work management image that is displayed on the terminal in the embodiment.
Fig. 6 is a flowchart illustrating processing executed by the work management system in the embodiment.

DESCRIPTION OF EMBODIMENTS

(First Embodiment)

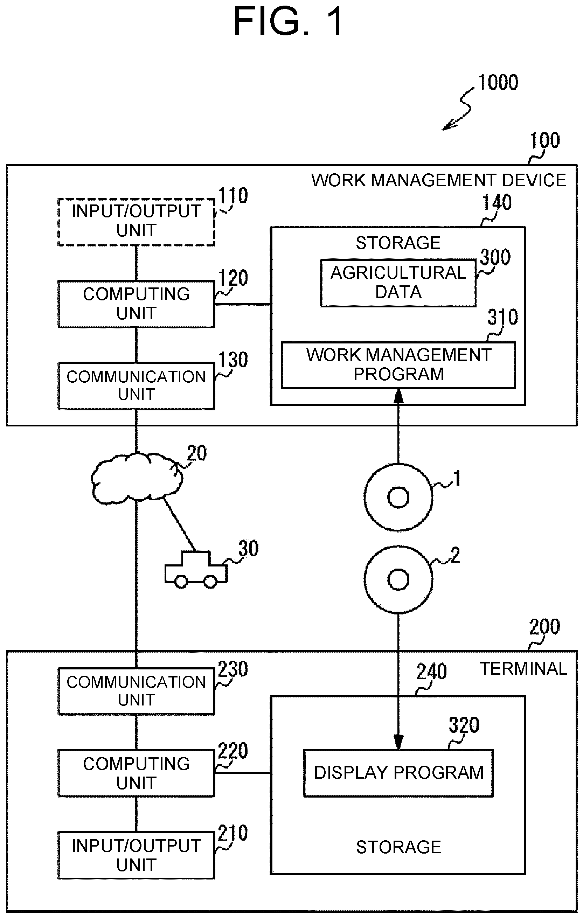

A description will be made on a work management system 1000 according to this embodiment of the present invention with reference to the drawings. As illustrated in Fig. 1, in this embodiment, the work management system 1000 includes a work management device 100 and a terminal 200. The work management device 100 is communicably connected to the terminal 200 and at least one work device 30 via a network 20, for example, the Internet.

The work device 30 moves in a field to perform agricultural work. The work management device 100 acquires operation information in the field from the at least one work device 30 and, based on the acquired operation information, stores agricultural data 300 on a work range, a planting amount, an amount of a sprayed pesticide, a yield amount, and the like. Examples of the work device 30 are a tractor, a rice planter, a harvester such as a combine harvester, and a sprayer that sprays the pesticide such as a drone. The work device 30 may also include a carrier vehicle that carries harvested crops, materials, or the like.

The operating information includes information on a state of the work device 30 at the time of working in the field, and examples of such information are a speed, a steering angle, and an engine speed of the work device 30, an ON/OFF status of each of various clutches, and location information of the work device 30 at each time. In the case where the work device 30 is a vehicle that tows a work machine, for example, the tractor, the operation information may include a power take-off (PTO) speed at the time of transmitting power to the work machine, a hitch height and a lift arm angle indicating a posture of the work machine, and the like.

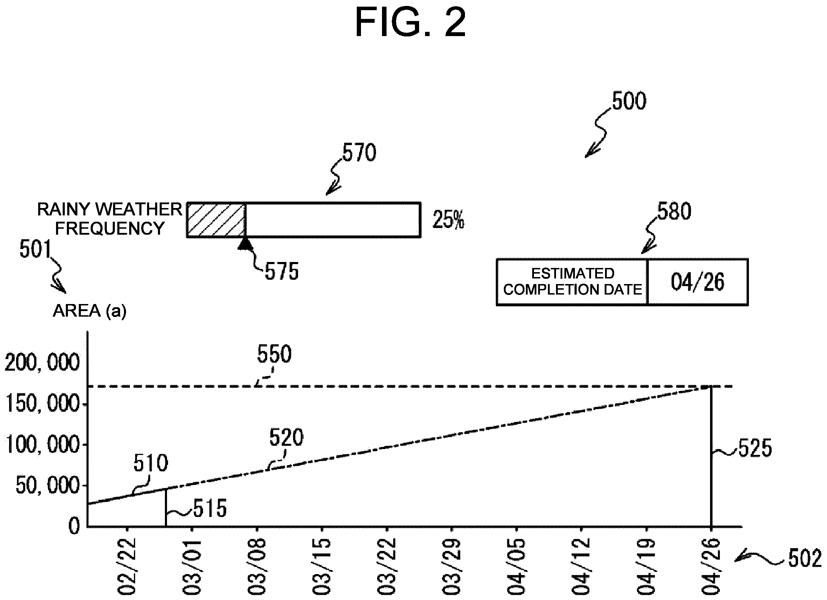

The work management device 100 calculates an estimated completion time when the work is completed in response to a request from the terminal 200, and outputs an estimated completion signal indicative of the calculated estimated completion time. Based on the estimated completion signal that has been output, the terminal 200 displays information on the estimated completion time. For example, as illustrated in Fig. 2, the terminal 200 displays a work management image 500 having an estimated date display area 580. The terminal 200 displays, as an estimated completion date, the estimated completion time in the estimated date display area 580.

Just as described, the work management system 1000 displays an estimated date on which the work is completed. By checking the work management image 500 on the terminal 200, a user understands the estimated date on which the work is completed, and manages work progress.

The work management image 500 also displays, as the work progress, a relationship between a workload 501 and a date 502. For example, in the case where the work progress of harvesting the crops is displayed, the workload 501 represents an area where the crops are harvested. The terminal 200 displays an actual workload 510 of the work that has been performed so far and a current time point 515 that represents a current date, and thereby displays a current progress status. The work management image 500 further displays a total workload 550 that represents an entire workload to be performed for harvesting, for example, an area of the range where the crops should be harvested. The work management image 500 displays: an estimated progress load 520 in the case where the work is performed at a current rate of progress; and an estimated completion date 525 on which the work is estimated to be completed. Moreover, the terminal 200 displays percentages of sunny days and rainy days from a start of the work in a rainy weather frequency display area 570 that is provided in the work management image 500. In this way, the user can understand the progress status of the work.

(Configuration of Work Management System)

A description will be made on a configuration of the work management device 100 that is included in the work management system 1000. As illustrated in Fig. 1, the work management device 100 includes an input/output unit 110, a computing unit 120, a communication unit 130, and a storage 140. The work management device 100 is a computer, for example. The input/output unit 110 receives information that is used by the computing unit 120 to execute processing. In addition, the input/output unit 110 outputs a result of the processing executed by the computing unit 120. The input/output unit 110 includes various input units and various output units, and examples of the input/output unit 110 are a keyboard, a mouse, a microphone, a display, a speaker, and a touch panel. The input/output unit 110 may not be provided.

The communication unit 130 is electrically connected to the network 20, and communicates with each device via the network 20. The communication unit 130 transfers the operation information, which is acquired from the work device 30, to the computing unit 120. In addition, the communication unit 130 forwards a signal generated by the computing unit 120 to the terminal 200. For example, the communication unit 130 includes various interfaces such as a network interface card (NIC) and Universal Serial Bus (USB).

The storage 140 stores various types of data for calculating the progress status, for example, the estimated completion time when the work is completed. For example, the storage 140 stores the agricultural data 300 and a work management program 310. The storage 140 is used as a non-transitory tangible storage medium to store the work management program 310. The work management program 310 may be provided as a computer program product that is recorded on a computer-readable storage medium 1, or may be provided as a computer program product that can be downloaded from a server.

The agricultural data 300 includes: the operation information that is acquired from the work device 30; and evaluation information that is calculated on the basis of the operation information. For example, the operation information includes the location information of the work device 30 at each time. The location information of the work device 30 is acquired from a positioning device, for example, a Global Navigation Satellite System (GNSS) receiver provided to the work device 30. The operation information also includes the planting amount, the amount of the sprayed pesticide, the yield amount, and the like that are associated with the location information.

The evaluation information includes a work area, the yield amount per unit area, the amounts of the sprayed pesticide and an applied fertilizer per unit area, an amount of planted crops, a sowing amount, and the like. For example, the work area where the work device 30 has performed the work is calculated from the location information of the work device 30.

The agricultural data 300 further includes information on the field where the work device 30 performs the work. For example, the agricultural data 300 includes an area of the field to be worked by the work device 30.

The computing unit 120 reads and executes the work management program 310 from the storage 140, so as to execute various types of data processing to calculate the progress status, for example, the estimated completion time when the work is completed. The computing unit 120 includes a central processing unit (CPU) and the like, for example.

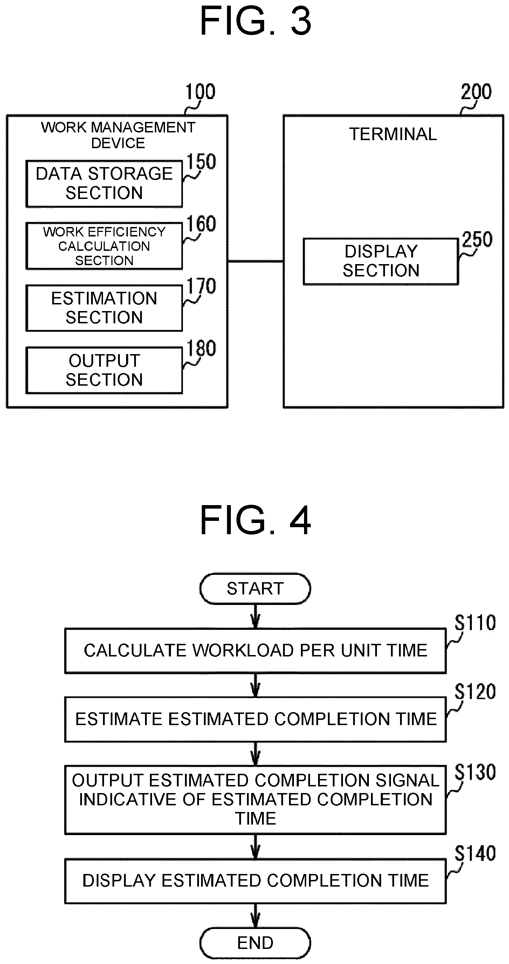

By reading and executing the work management program 310, as illustrated in Fig. 3, the computing unit 120 implements a data storage section 150, a work efficiency calculation section 160, an estimation section 170, and an output section 180. The data storage section 150 stores the agricultural data 300. Based on the agricultural data 300, the work efficiency calculation section 160 calculates work efficiency that represents the workload per unit time. The estimation section 170 calculates the progress status, for example, the estimated completion time on the basis of the calculated work efficiency and the work area of the range where the work should be performed. The output section 180 outputs a progress signal indicative of the calculated progress status, for example, the estimated completion signal.

Next, a description will be made on a configuration of the terminal 200. As illustrated in Fig. 1, the terminal 200 includes an input/output unit 210, a computing unit 220, a communication unit 230, and a storage 240. Examples of the terminal 200 are a computer, a tablet computer, and a mobile phone. The input/output unit 210 receives information that is used by the computing unit 220 to execute processing. In addition, the input/output unit 210 outputs a result of the processing executed by the computing unit 220. The input/output unit 210 includes various input units and various output units, and examples of the input/output unit 210 are a keyboard, a mouse, a microphone, a display, a speaker, and a touch panel.

The communication unit 230 is electrically connected to the network 20 and communicates with each of the devices via the network 20. The communication unit 230 transfers the information acquired from the work management device 100 to the computing unit 220. In addition, the communication unit 230 forwards a signal generated by the computing unit 220 to the work management device 100. For example, the communication unit 230 includes various interfaces such as the network interface card (NIC) and the Universal Serial Bus (USB).

The storage 240 stores various types of data used to display the progress status, for example, the estimated completion time when the work is completed on the input/output unit 210 of the terminal 200. For example, the storage 240 stores a display program 320. The storage 240 is used as the non-transitory tangible storage medium to store the display program 320. The display program 320 may be provided as a computer program product that is recorded on a computer-readable storage medium 2, or may be provided as a computer program product that can be downloaded from a server. The display program 320 may be recorded on the storage medium 1 and provided.

The computing unit 220 reads and executes the display program 320, so as to execute various types of data processing to display the progress status acquired from the work management device 100, for example, the estimated completion time when the work is completed. The computing unit 220 includes a central processing unit (CPU) and the like, for example.

When reading and executing the display program 320, the computing unit 220 cooperates with the input/output unit 210 to implement a display section 250 as illustrated in Fig. 3. The display section 250 acquires the progress status from the work management device 100, and displays the work management image 500 showing the progress status.

(Operation of Work Management System)

When the work device 30 illustrated in Fig. 1 is stopped, for example, when an engine thereof is stopped, the work device 30 transmits the operation information to the work management device 100. The work device 30 may sequentially transmit the operation information to the work management device 100 when being operated.

When receiving the operation information from the work device 30, the computing unit 120 of the work management device 100 reads and executes the work management program 310 to start processing illustrated in Fig. 4, which is a work management method. The data storage section 150, which is implemented by the computing unit 120, stores the received operation information in the agricultural data 300.

In step S110, the work efficiency calculation section 160, which is implemented by the computing unit 120, calculates the work efficiency, which represents the workload per unit time, on the basis of the operation information. For example, based on the operation information and a precipitation amount in a region including the field where the work has been performed, the work efficiency calculation section 160 calculates the work efficiency according to the precipitation amount.

First, the work efficiency calculation section 160 acquires the precipitation amounts of days, which include days on which the work has been performed, in the region including the field where the work has been performed. The precipitation amount may be acquired from a weather information server that is not a part of the work management system 1000, or may be entered by the user into the input/output unit 210 of the terminal 200.

Next, the work efficiency calculation section 160 classifies work days, on which the work device 30 has performed the work, into plural precipitation states according to the acquired precipitation amounts. For example, the work efficiency calculation section 160 classifies a day on which the precipitation amount is smaller than a threshold value as a sunny day, and classifies a day on which the precipitation amount is equal to or larger than the threshold value as a rainy day. The work efficiency calculation section 160 may set the two or more threshold values to classify the work days into the three or more precipitation states. In addition, the precipitation states may be classified on the basis of the precipitation amount in a period that extends back a predetermined period from the work date.

Next, the work efficiency calculation section 160 calculates the work efficiency for each of the classified precipitation states. For example, the work efficiency calculation section 160 calculates, per precipitation state, the workload at the crops harvesting by the at least one work device 30, for example, a sum of work areas that represents a harvested area. In addition, the work efficiency calculation section 160 calculates, per precipitation state, a sum of work times that represents a time required for harvesting. The work efficiency calculation section 160 calculates the work efficiency, which represents the workload per unit time, by dividing the sum of the workloads by the sum of the work time for each of the precipitation states.

In step S120, the estimation section 170 estimates the estimated completion time when the work is completed on the basis of the calculated work efficiency and the total workload 550 to be performed by the at least one work device 30. For example, the estimation section 170 estimates the estimated completion time on the basis of a state frequency, the work efficiency, and the total workload 550. The state frequency represents a percentage of rainfall in the region including the field where the work is performed. The total workload 550 is a sum of the workloads to be performed by each of the work devices 30 in the case where the plural work devices 30 perform the work.

First, the estimation section 170 calculates the state frequency in the region including the field where the work is performed. For example, based on the operation information, the estimation section 170 calculates, as the state frequency, a percentage of the number of days in each of the precipitation states to the number of days on which the work device 30 has performed the work. For example, in the case where the work device 30 has performed the work in 20 days and 5 out of 20 days are the rainy days, the estimation section 170 calculates the state frequency representing the rainy days as 25%. In the case where the work device 30 has performed the work in 20 days and 15 out of 20 days are the sunny days, the estimation section 170 calculates the state frequency representing the sunny days as 75%.

Next, the estimation section 170 acquires the total workload 550 of the work to be performed by the work device 30. The total workload 550 is stored in the agricultural data 300, for example.

Next, the estimation section 170 calculates a date on which the work with the total workload 550 is completed at the calculated work efficiency in each of the precipitation states in the region where each of the precipitation states occurs at the percentage represented by the calculated state frequency. For example, the estimation section 170 calculates the number of work days x that satisfies Equation (1).

[Equation 1]

$$\sum_i \sum_j \alpha_{i,j} \beta_j x = w_{all} - w_d \qquad (1)$$

where i represents the target work device 30 and j represents each of the precipitation states. $\alpha_{i,j}$ represents the work efficiency of the work device 30 that corresponds to i in the precipitation state j. In addition, $\beta_j$ represents the state frequency in the precipitation state j. Furthermore, $w_{all}$ represents the total workload 550 to be performed by the work device 30, and $w_d$ represents the workload that has been completed at the current time point.

Finally, the estimation section 170 adds the calculated number of work days x to the current date, so as to calculate the estimated completion time.

In step S130, the output section 180 outputs the estimated completion signal indicative of the calculated estimated completion time. The estimated completion signal includes a signal indicative of the work management image 500 illustrated in Fig. 2 in addition to the estimated completion time. The output section 180 generates the estimated completion signal indicative of each piece of the information included in the work management image 500. Alternatively, the output section 180 may generate image data that represents the work management image 500, and may generate the estimated completion signal indicative of the generated image data.

In step S140 illustrated in Fig. 4, the display section 250, which is implemented by the computing unit 220 of the terminal 200, displays the work management image 500 including the estimated completion time on the basis of the estimated completion signal. By checking the work management image 500, the user understands the estimated completion date on which the work is completed, and manages the work progress.

(Second Embodiment)

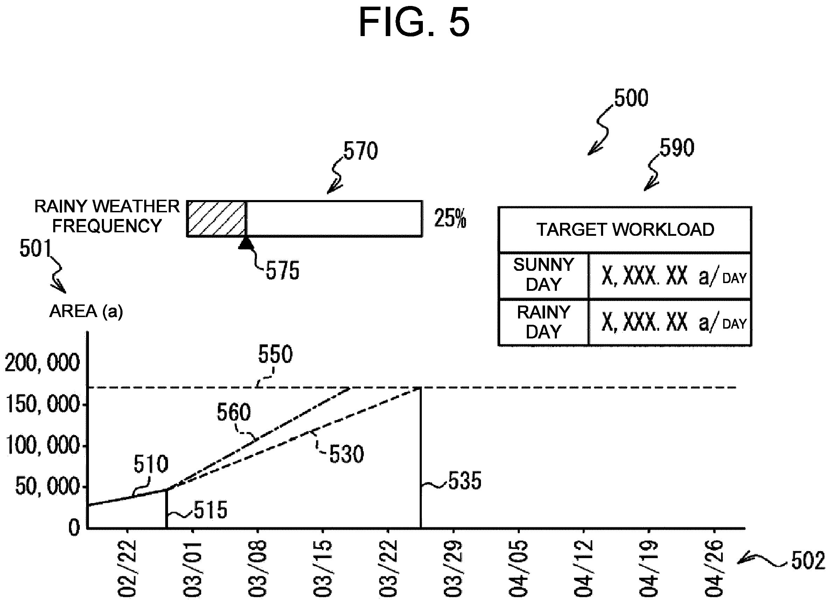

Furthermore, the work management system 1000 may notify the user of target efficiency to complete the work on a target completion date that is entered by the user. The target efficiency represents a target workload that is a workload to be performed per unit time, for example, per day. For example, as illustrated in Fig. 5, the terminal 200 displays the work management image 500 that includes a target efficiency display area 590. In the target efficiency display area 590, the target efficiency in each of the precipitation states is displayed.

The work management image 500 also shows: a target progress load 530 in the case where the work is performed at the target efficiency; and a target completion date 535. The work management image 500 may further show a limit workload 560. The limit workload 560 represents a maximum value of the workload that can be handled by the work performed before or after the work. In the case where the limit workload 560 represents the work for harvesting the crops, for example, the limit workload 560 represents the progress load corresponding to the yield amount with which harvesting work such as drying can be performed after harvesting. In addition, in the case where the crops are sugarcane, the harvesting work may be sugar processing in a sugar factory, or the like. For example, in the case where the maximum yield amount that can be handled in the harvesting work is 900 tons per day and the yield amount is 0.4 ton per acre, the estimation section 170 calculates that the limit workload 560 is 2250 acres per day.

Since the configuration of the work management system 1000 is the same as that in the first embodiment, the description thereon will not be made.

(Operation of Work Management System)

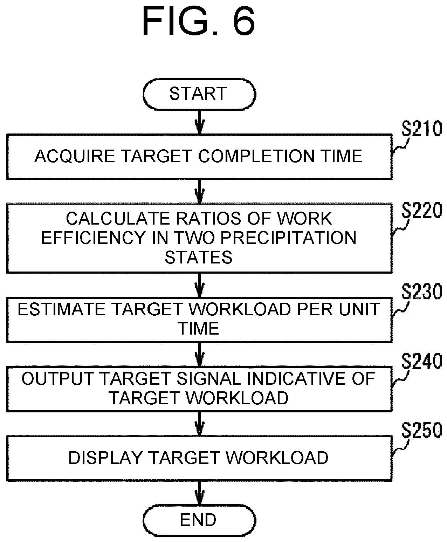

When receiving the operation information from the work device 30, the computing unit 120 of the work management device 100 reads and executes the work management program 310 to start processing illustrated in Fig. 6, which is the work management method. In step S210, the estimation section 170, which is implemented by the computing unit 120, acquires target completion time. For example, the estimation section 170 acquires a target management time, which is registered in advance, from the storage 140. Alternatively, the estimation section 170 may receive, from the display section 250, the target completion time that is entered by the user into the input/output unit 210 of the terminal 200.

In step S220, the work efficiency calculation section 160 calculates a ratio of the work efficiency in the two precipitation states, which are acquired by classifying the work days by the precipitation amount. For example, based on the operation information and the precipitation amount in the region including the field, the work efficiency calculation section 160 calculates the work efficiency according to the precipitation amount. Based on the calculated work efficiency, the work efficiency calculation section 160 calculates the ratio of the work efficiency in the two precipitation states, which are acquired by classifying the work days by the precipitation amount.

First, similar to step S110 illustrated in Fig. 4 in the first embodiment, the work efficiency calculation section 160 calculates the work efficiency. More specifically, the work efficiency calculation section 160 acquires the precipitation amounts of the days, which include the days on which the work has been performed, in the region including the field where the work has been performed. The work days, on which the work device 30 has performed the work, are classified into the plural precipitation states according to the acquired precipitation amounts. The work efficiency calculation section 160 calculates the work efficiency by calculating, for each of the classified precipitation states, the sum of the workloads and the sum of the work time and dividing the calculated sum of the workloads by the sum of the work time.

Next, the work efficiency calculation section 160 calculates the ratio of the work efficiency in a combination of the two precipitation states. For example, in the case where the work days are classified into the two precipitation states (for example, into the sunny days and the rainy days), the work efficiency calculation section 160 calculates a ratio of the work efficiency in the rainy days to the work efficiency in the sunny days. In the case where the work days are classified into the three or more precipitation states, the work efficiency calculation section 160 sets the work efficiency in one of the precipitation states as reference work efficiency, and calculates the ratio of the work efficiency in each of the precipitation states to the reference work efficiency. Thus, the work efficiency in each of the precipitation states is expressed by the reference work efficiency and the ratio.

In step S230 illustrated in Fig. 6, the estimation section 170 calculates the target efficiency, which represents the target workload per unit time in each of the precipitation states, on the basis of the calculated ratio of the work efficiency, the target completion time, and the total workload 550 to be performed by the work device 30. For example, the estimation section 170 estimates the target efficiency on the basis of the state frequency, the ratio, the target completion time, and the total workload 550. The state frequency represents the percentage of rainfall in the region including the field where the work is performed.

First, the estimation section 170 calculates the state frequency in the region including the field where the work is performed. Since a method for calculating the state frequency is the same as that in step S120 illustrated in Fig. 4, a detailed description thereon will not be made.

Next, the estimation section 170 acquires the total workload 550 to be performed by the work device 30. The total workload 550 is stored in the agricultural data 300, for example.

Next, the estimation section 170 calculates the work efficiency for completing the work with the total workload 550 by the target completion time in the case where the work is performed at the calculated ratio of the work efficiency in each of the precipitation states in the region where each of the precipitation states occurs at the percentage represented by the calculated state frequency. For example, the estimation section 170 calculates reference work efficiency $\alpha_b$ that satisfies Equation (2). For example, $\alpha_b$ represents the work efficiency of one of the at least one work device 30 in any given precipitation state.

[Equation 2]

$$\sum_i \sum_j \alpha_b \gamma_{i,j} \beta_j x = w_{all} - w_d \qquad (2)$$

where i represents the target work device 30 and j represents each of the precipitation states. $\gamma_{i,j}$ represents the ratio of the work efficiency of the work device 30, which corresponds to i in the precipitation state j, to the reference work efficiency. In addition, $\beta_j$ represents the state frequency in the precipitation state j. x represents the number of work days in a period from the current time point to the target completion time. Furthermore, $w_{all}$ represents the total workload 550 to be performed by the work device 30, and $w_d$ represents the workload that has been completed at the current time point.

Finally, the estimation section 170 integrates the ratio $\gamma_{i,j}$ of the work efficiency of the work device 30 in the corresponding precipitation state to the calculated reference work efficiency $\alpha_b$, so as to calculate the target efficiency that represents the target workload per unit time in the respective precipitation state.

In step S240, the output section 180 outputs a target signal indicative of the calculated target workload. The target signal includes a signal indicative of the work management image 500 illustrated in Fig. 5 in addition to the target workload per unit time. The output section 180 generates the estimated completion signal indicative of each piece of the information included in the work management image 500. Alternatively, the output section 180 may generate the image data that represents the work management image 500, and may generate the estimated completion signal indicative of the generated image data.

In step S250 illustrated in Fig. 6, the display section 250, which is implemented by the computing unit 220 of the terminal 200, displays the work management image 500 including the target efficiency display area 590 as illustrated in Fig. 5 on the basis of the target signal. By checking the work management image 500, the user understands the target workload for completing the work by the target completion time, and manages the work progress.

(Modified Embodiments)

The configuration that has been described in each of the embodiments merely constitutes an example, and the configuration can be modified within the scope that does not interfere with the functions. For example, the estimation section 170 may estimate the target efficiency, which represents the target workload per unit time, such that the workload that can be handled by the work before or after the work becomes equal to or smaller than the limit workload 560 as the maximum value. In the case where the target efficiency in any of the plural precipitation states requires the larger workload than the limit workload 560, the estimation section 170 fixes such target efficiency to have the limit workload 560 and calculates the reference work efficiency $\alpha_b$. For example, the estimation section 170 calculates the reference work efficiency $\alpha_b$ that satisfies Equation (3).

[Equation 3]

$$\sum_i \left( \sum_j \alpha_b \gamma_{i,j} \beta_j x + \sum_k \alpha_{max} \beta_k x \right) = w_{all} - w_d \qquad (3)$$

where i represents the target work device 30, j represents each of the precipitation states where the target efficiency requires the smaller workload than the limit workload 560, and $\gamma_{i,j}$ represents the ratio of the work efficiency of the work device 30 corresponding to i in the precipitation state j to the reference work efficiency. In addition, $\beta_j$ represents the state frequency in the precipitation state j. x represents the number of work days in a period from the current time point to the target completion time. k represents each of the precipitation states where the target efficiency requires the workload that is equal to or larger than the limit workload 560, and $\beta_k$ represents the state frequency in a precipitation state k. $\alpha_{max}$ represents the limit workload 560 as the maximum value of the target efficiency. Furthermore, $w_{all}$ represents the total workload 550 to be performed by the work device 30, and $w_d$ represents the workload that has been completed at the current time point.

The estimation section 170 calculates the target efficiency with smaller workload than the limit workload 560 on the basis of the calculated reference work efficiency $\alpha_{max}$ and the ratio $\gamma_{i,j}$, and calculates the target efficiency with the workload that is equal to or larger than the limit workload 560 as the limit workload 560. In this way, the estimation section 170 calculates the target efficiency with the workload that is equal to or smaller than the limit workload 560. As a result, the work management system 1000 reduces a possibility of calculating the target workload that cannot be handled by the work performed before or after the work.

The estimation section 170 may estimate the target efficiency to be equal to or lower than a threshold value at which the workload is smaller than the limit workload 560. In this case, in Equation (3), the estimation section 170 calculates the reference work efficiency $\alpha_b$ with $\alpha_{max}$ being the threshold value. As a result, the work management system 1000 reduces the possibility of calculating the target workload that cannot be handled by the work performed before or after the work.

This limit workload 560 may be calculated in any given method. For example, the limit workload 560 may be calculated on the basis of the yield amount per unit area that the user enters into the input/output unit 210 and the yield amount that can be produced by the work before or after the work. For example, the estimation section 170 acquires, from the display section 250 of the terminal 200, the entered yield amount per unit area and the yield amount that can be produced. Alternatively, the yield amount per unit area may be calculated on the basis of the operation information. The data storage section 150 acquires, from the operation information, the area where the work device 30 has performed the work and the yield amount harvested by the work device 30. Based on the acquired area and the acquired yield amount, the data storage section 150 calculates the yield amount per unit area.

The state frequency, which represents a percentage of the work days belonging to each of the precipitation states, may not be determined by a method for determining on the basis of the percentage of the work days on which the work has been performed up to the current time point, but may be determined in any given method. For example, the state frequency may be determined according to input by the user to the input/output unit 210 of the terminal 200. For example, on the input/output unit 210, the user performs an operation to move a slider 575 in the rainy weather frequency display area 570 illustrated in Fig. 2 or Fig. 5 to the left or right. The display section 250 of the terminal 200 illustrated in Fig. 3 identifies the state frequency on the basis of the input operation by the user, and outputs a signal indicative of the identified state frequency to the estimation section 170 of the work management device 100. The estimation section 170 uses the state frequency that is acquired from the display section 250 to estimate the progress status, for example, the estimated completion time or the target efficiency. The output section 180 outputs the progress signal indicative of the estimated progress status, for example, the estimated completion signal or the target signal.

The work efficiency calculation section 160 may represent the work efficiency corresponding to the precipitation amount in any given method. For example, the work efficiency calculation section 160 calculates a function, which is used to calculate the workload according to the precipitation amount, on the basis of the operation information and weather information. For example, this function is an approximate curve that represents a relationship between the precipitation amount and the workload. In this case, the estimation section 170 estimates the estimated completion time on the basis of distribution of the precipitation amount in the region including the field where the work is performed; the function used to calculate the workload according to the precipitation amount; and the total workload 550.

The work efficiency calculation section 160 may represent a ratio of the target efficiency corresponding to the precipitation amount in any given method. For example, the work efficiency calculation section 160 calculates the function, which is used to calculate the workload according to the precipitation amount, on the basis of the operation information and the weather information. The estimation section 170 estimates the target efficiency on the basis of the distribution of the precipitation in the region including the field where the work is performed; the function used to calculate the workload according to the precipitation amount; the total workload 550; and the target completion time. For example, based on the distribution of the precipitation amount in the region including the field where the work is performed and the function used to calculate the workload according to the precipitation amount, the estimation section 170 calculates the workload that is completed by the target completion time when the work device 30 performs the work with the workload according to the precipitation amount. The estimation section 170 calculates the target efficiency by multiplying the ratio of the total workload 550 to the workload to be completed by the target completion time by the workload according to the precipitation amount.

The display section 250 may display information on each of the work devices 30 in a distinguishable manner in the work management image 500 illustrated in Fig. 2 or Fig. 5. For example, the display section 250 may display the work management image 500 for each of the work devices 30, or may display the actual workload 510, the estimated progress load 520, the target progress load 530, and the like for each of the work devices 30 in the single work management image 500. In this way, the user, for example, an owner of the field can understand the progress status by each of the work devices 30 and change the field assigned to each of the work devices 30. In addition, the display section 250 may also display information on each of the fields in the work management image 500 illustrated in Fig. 2 or Fig. 5. In this case, the target workload of each of the work devices 30 is calculated by integrating the ratio $y_{i,j}$ to the reference work efficiency $\alpha_b$.

The work efficiency calculation section 160 and the estimation section 170 may calculate the work efficiency, the estimated completion time, the target efficiency, and the like without the classification by the precipitation state. In this case, in step S110 illustrated in Fig. 4, the work efficiency calculation section 160 calculates the work efficiency, which represents the workload per unit time, on the basis of the operation information. In addition, the work efficiency calculation section 160 omits the processing in step S220 illustrated in Fig. 6. In step S230 illustrated in Fig. 6, the estimation section 170 estimates the target efficiency, which represents the target workload to be performed per unit time, on the basis of the target completion time and the total workload 550.

The estimated completion time is not limited to the date on which the work is completed, but may represent any given time such as a week in which the work is completed. The work efficiency represents the workload per unit of time, and the unit time may represent any given period such as a day or a week. The workload is not limited to the work area, but may represent any given value representing the work progress, for example, the planting amount.

In the description that has been made so far, each of the embodiments and the modified embodiments merely constitutes an example. The configuration that has been described in each of the embodiments and the modified embodiments may be modified as desired within the scope that does not interfere with the functions or/and may be combined as desired. Furthermore, some of the functions that have been described in the embodiments and the modified embodiments may not be provided as long as the necessary functions can be exerted. For example, the work efficiency calculation section 160, the estimation section 170, and the output section 180 may be implemented by the terminal 200. In this case, the terminal 200 acquires the agricultural data 300 from the data storage section 150 of the work management device 100. The work efficiency calculation section 160, which is implemented by the terminal 200, calculates the work efficiency or the ratio of the work efficiency. The estimation section 170 of the terminal 200 estimates the estimated completion time or the target efficiency on the basis of the work efficiency or the ratio of the work efficiency. The output section 180 outputs the signal indicative of the estimated completion time or target efficiency, which has been estimated, to the display section 250. The display section 250 displays the estimated completion time or the target efficiency. The work management device 100 may partially or entirely be implemented by the terminal 200.

REFERENCE SIGNS LIST

1, 2: Storage medium
20: Network
30: Work device
100: Work management device
110: Input/output unit
120: Computing unit
130: Communication unit
140: Storage
150: Data storage section
160: Work efficiency calculation section
170: Estimation section
180: Output section
200: Terminal
210: Input/output unit
220: Computing unit
230: Communication unit
240: Storage
250: Display section
300: Agricultural data
310: Work management program
320: Display program
500: Work management image
501: Workload
502: Date
510: Actual workload
515: Current time point
520: Estimated progress load
525: Estimated completion date
530: Target progress load
535: Target completion date

550: Total workload
560: Limit workload
570: Rainy weather frequency display area
575: Slider
580: Estimated date display area
590: Target efficiency display area
1000: Work management system

**Claims**

1. A work management method comprising:

   calculating work efficiency that represents a workload performed by at least one work device in a unit time on the basis of operation information indicative of work performed by the at least one work device in a field;
   estimating an estimated completion time when the work is completed on the basis of the work efficiency and a total workload to be performed by the at least one work device; and
   outputting an estimated completion signal indicative of the estimated completion time that has been estimated.

2. The work management method according to claim 1, wherein

   the calculation of the work efficiency includes calculating the work efficiency according to a precipitation amount in a region including the field on the basis of the precipitation amount and the operation information, and
   the estimation of the estimated completion time includes estimating the estimated completion time on the basis of a first state frequency representing a percentage of rain in the region including the field and the work efficiency according to the precipitation amount.

3. The work management method according to claim 2, wherein

   the calculation of the work efficiency according to the precipitation amount includes:

      classifying days on which the at least one work device has performed the work into plural precipitation states on the basis of the precipitation amount; and
      calculating the work efficiency in each of the plural precipitation states, and

   the first state frequency represents a percentage of each of the plural precipitation states in a period from a current time point to completion of the work.

4. The work management method according to claim 2 or 3, wherein the first state frequency is entered by a user.

5. The work management method according to claim 2 or 3, wherein
   the first state frequency represents the percentage of each of the precipitation states in the work that has been performed up to the current time point on the basis of the operation information and the precipitation amount.

6. The work management method according to any one of claims 1 to 5, wherein

   the calculation of the work efficiency includes calculating the work efficiency for each of the at least one work device, and
   the estimation of the estimated completion time includes estimating the estimated completion time for each of the at least one work device.

7. A work management method comprising:

   estimating target efficiency that represents a workload to be performed by at least one work device in a unit time on the basis of a total workload of work to be performed by the at least one work device in a field and a target completion time in which the work should be completed; and
   outputting a target signal indicative of the estimated target efficiency.

8. The work management method according to claim 7, wherein

   the estimation of the target efficiency includes:

   calculating a ratio of the workload performed by the at least one work device according to a precipitation amount in a region including the field on the basis of the precipitation amount and operation information indicative of work performed by the at least one work device in the field; and
   estimating the target efficiency according to the precipitation amount on the basis of the calculated ratio, and

   the estimation of the target efficiency includes estimating the target efficiency on the basis of a second state frequency that represents a percentage of rain in the region including the field and of the ratio.

9. The work management method according to claim 8, wherein

   the calculation of the ratio of the workload includes:

   classifying days on which the at least one work device has performed the work into plural precipitation states on the basis of the precipitation amount; and
   calculating the ratios of the workload in two precipitation states of the plural precipitation states, and

   the second state frequency represents a percentage of each of the plural precipitation states in a period from a current time point to completion of the work.

10. A work management system comprising:

    a work efficiency calculation section that calculates work efficiency representing a workload performed by at least one work device in a unit time on the basis of operation information indicative of work performed by the at least one work device in a field;
    an estimation section that estimates an estimated completion time when the work is completed on the basis of the work efficiency and a total workload to be performed by the at least one work device; and
    an output section that outputs an estimated completion signal indicative of the estimated completion time that has been estimated.

11. A work management system comprising:

    an estimation section that estimates target efficiency representing a workload to be performed by at least one work device in a unit time on the basis of a total workload of work to be performed by the at least one work device in a field and a target completion time in which the work should be completed; and
    an output section that outputs a target signal indicative of the estimated target efficiency.

12. A work management program causing a computing unit to:

    calculate work efficiency that represents a workload performed by at least one work device in a unit time on the basis of operation information indicative of work performed by the at least one work device in a field;
    estimate an estimated completion time when the work is completed on the basis of the work efficiency and a total workload to be performed by the at least one work device; and
    output an estimated completion signal indicative of the estimated completion time that has been estimated.

13. A work management program causing a computing unit to:

    estimate target efficiency that represents a workload to be performed by at least one work device in a unit time on the basis of a total workload of work to be performed by the at least one work device in a field and a target completion time by which the work should be completed; and
    output a target signal indicative of the estimated target efficiency.

# FIG. 1

1000

100

**WORK MANAGEMENT DEVICE**

110
INPUT/OUTPUT UNIT

140
STORAGE

300
AGRICULTURAL DATA

120
COMPUTING UNIT

310
WORK MANAGEMENT PROGRAM

130
COMMUNICATION UNIT

20

30

1

2

200

230
COMMUNICATION UNIT

240

320
DISPLAY PROGRAM

220
COMPUTING UNIT

TERMINAL

210
INPUT/OUTPUT UNIT

STORAGE

# FIG. 2

RAINY WEATHER
FREQUENCY
570
25%
575

500

580
| ESTIMATED COMPLETION DATE | 04/26 |

501
AREA (a)

550

200,000

150,000

520

100,000

510

525

50,000

515

0

02/22  03/01  03/08  03/15  03/22  03/29  04/05  04/12  04/19  04/26

502

EP 4 083 878 A1

# FIG. 3

100

WORK MANAGEMENT
DEVICE

| DATA STORAGE SECTION | 150 |

| WORK EFFICIENCY CALCULATION SECTION | 160 |

| ESTIMATION SECTION | 170 |

| OUTPUT SECTION | 180 |

200

TERMINAL

| DISPLAY SECTION | 250 |

# FIG. 4

START

CALCULATE WORKLOAD PER UNIT TIME — S110

ESTIMATE ESTIMATED COMPLETION TIME — S120

OUTPUT ESTIMATED COMPLETION SIGNAL INDICATIVE OF ESTIMATED COMPLETION TIME — S130

DISPLAY ESTIMATED COMPLETION TIME — S140

END

# FIG. 5

RAINY WEATHER FREQUENCY: 570 — 25% — 575

501 — AREA (a)

500 — 590

| TARGET WORKLOAD | |
|---|---|
| SUNNY DAY | X, XXX. XX a/DAY |
| RAINY DAY | X, XXX. XX a/DAY |

550, 560, 510, 515, 530, 535, 502

200,000
150,000
100,000
50,000
0

02/22  03/01  03/08  03/15  03/22  03/29  04/05  04/12  04/19  04/26

# FIG. 6

```
        ( START )
            │
            ▼                                    S210
┌─────────────────────────────────┐
│  ACQUIRE TARGET COMPLETION TIME │
└─────────────────────────────────┘
            │
            ▼                                    S220
┌─────────────────────────────────┐
│      CALCULATE RATIOS OF WORK    │
│  EFFICIENCY IN TWO PRECIPITATION │
│             STATES               │
└─────────────────────────────────┘
            │
            ▼                                    S230
┌─────────────────────────────────┐
│ ESTIMATE TARGET WORKLOAD PER UNIT│
│              TIME                │
└─────────────────────────────────┘
            │
            ▼                                    S240
┌─────────────────────────────────┐
│  OUTPUT TARGET SIGNAL INDICATIVE OF │
│         TARGET WORKLOAD          │
└─────────────────────────────────┘
            │
            ▼                                    S250
┌─────────────────────────────────┐
│      DISPLAY TARGET WORKLOAD     │
└─────────────────────────────────┘
            │
            ▼
         ( END )
```

Europäisches
Patentamt

European
Patent Office

Office européen
des brevets

# EUROPEAN SEARCH REPORT

Application Number

EP 22 16 8350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/059691 A1 (FLEMING KALA K [KE] ET AL) 1 March 2018 (2018-03-01) <br> * paragraph [0007] * <br> * paragraph [0040] * <br> * paragraph [0066] – paragraph [0070] * <br> * paragraph [0077] – paragraph [0078] * <br> ————— | 1–13 | INV. <br> G06Q10/04 <br><br> ADD. <br> G06Q50/02 |

TECHNICAL FIELDS
SEARCHED      (IPC)

G06Q

The present search report has been drawn up for all claims

| Place of search | Date of completion of the search | Examiner |
|---|---|---|
| Munich | 20 July 2022 | Reino, Bernardo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 8350

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2022

| Patent document cited in search report | Publication date | Patent family member(s) | Publication date |
|---|---|---|---|
| US 2018059691 A1 | 01-03-2018 | NONE | |

For more details about this annex : see Official Journal of the European Patent Office, No. 12/82

**EP 4 083 878 A1**

REFERENCES CITED IN THE DESCRIPTION

**Patent documents cited in the description**

- JP 6267337 B